# EUROPEAN PATENT APPLICATION

(11) **EP 1 580 753 A1**
(43) Date of publication of application: **28.09.2005**
(21) Application number: 04708012.2
(22) Date of filing: 04.02.2004
(51) Int. Cl.: G11B 27/00, G11B 27/10, G11B 20/12

(54) **DIGITAL DATA RECORDING MEDIUM AND RECORDING/REPRODUCTION DEVICE**

(30) Priority: 12.02.2003 JP 2003033999
(71) Applicant: SONY CORPORATION, Tokyo 141-0001 (JP)
(72) Inventor: KII, Manabu, c/o Sony Corporation, Tokyo 1410001 (JP); KAWAKAMI, Takashi, c/o Sony Corporation, Tokyo 1410001 (JP); YAMAUCHI, Yasuharu, c/o Sony Corporation, Tokyo 1410001 (JP)
(74) Representative: Smith, Samuel Leonard
(86) International application number: PCT/JP2004/001095
(87) International publication number: WO 2004/072976

(57) **Abstract**

A CD-R (20) in which the load when a CD player reads-in fringe data may be relieved to shorten the time until display. This CD-R is provided with contents files "00001" to "0000n", holding respective contents, and database files TRNDB, ARNDB and ALNDB. In the contents files "00001" to "0000n", data of the supplementary information of the contents, for each of the contents files "00001" to "0000n", are stored, along with the contents. The database files TRNDB, ARNDB and ALNDB hold data of the supplementary information for each of the contents files "00001" to "0000n".

## Description

### Technical Field

This invention relates to a recording medium and a recording method in which supplementary data matched to contents data are recorded along with the contents data. This invention also relates to a recording and/or reproducing apparatus.

This application claims priority of Japanese Patent Application No.2003-033999, filed in Japan on February 12, 2003, the entire contents of which being incorporated by reference herein.

### Background Art

In the Compact Disc (CD), having music data recorded therein, data of the supplementary information, such as titles (names of music airs), artists' names or album names, are generally termed 'fringe data'. These fringe data may, for example, be recorded as CD text in a recording area of the CD, so that, when the CD is reproduced, the fringe information, such as titles, may be displayed by the fringe data. The technique of recording the fringe data on a CD and reproducing the so recorded fringe data has been disclosed in the Japanese Laid-Open Patent Publication H-11-85094 and in the Japanese Laid-Open Patent Publication H-11-250631.

Meanwhile, in recording the fringe data as CD text on a CD, these data are stored in a file distinct from a file for contents data, such as music data.

If, in a CD where the fringe data are recorded in a file distinct from one for the contents data, a title is to be displayed by the fringe data, at the time of reproducing the CD, both the file holding the contents data and the file holding the fringe data need to be accessed. This means that a time-consuming operation needs to be carried out in case of a recording medium reproduced by an optical head, such as a CD.

Moreover, the fringe data for one CD is of a large capacity (number of bytes), such that, with a portable CD player, the fringe data read-in operation means a significant load in view of the small memory capacity usable for the system.

### Disclosure of the Invention

It is an object of the present invention to provide a recording medium for digital data, a recording apparatus and a reproducing apparatus, whereby the aforementioned problem of the related art may be solved.

A recording medium according to the present invention has recorded thereon a contents file and a database file, in which the contents file has stored therein contents data and supplementary data matched to the contents data, with the database file having stored therein supplementary data matched to the contents data.

The data size of the supplementary data stored in the contents file and the data size of the supplementary data stored in the database file are prescribed to maintain the identity of the data stored in the contents file and the supplementary data stores in the database file.

The contents data are digital audio data, the supplementary data is data of the title, artist's name and the album name, and the data of the title, the data of the artist's name and the album data are held in respective different database files.

The recording medium according to the present invention is a disc-shaped recording medium on which recording is made by a recording head.

A recording method according to the present invention comprises recording, on a predetermined recording medium, a contents file having stored therein supplementary data for contents data, along with the contents data, and recording, on the predetermined recording medium, a database file having stored therein supplementary data matched to the contents data.

A recording apparatus according to the present invention records, on a predetermined recording medium, a contents file and a database file, in which the contents file has stored therein contents data and supplementary data matched to the contents data, with the database file having stored therein supplementary data matched to the contents data.

A reproducing apparatus according to the present invention comprises readout means for reading out, from a recording medium having recorded thereon a contents file and a database file, with the contents file having stored therein supplementary data matched to contents data, along with the contents data, and with the database file having stored therein supplementary data matched to the contents data, the supplementary data stored in the contents file, and outputting means for outputting the supplementary data read out by the readout means.

The reproducing apparatus according to the present invention further comprises reproducing means for the contents data. The readout means also reads out contents data stored in the contents file, and the reproducing means reproduces the contents data read out from the readout means.

Another reproducing apparatus according to the present invention comprises readout means for reading out, from a recording medium having recorded thereon a contents file and a database file, with the contents file having stored therein contents data and supplementary data matched to the contents data, and with the database file having stored therein the supplementary data matched to the contents data, the supplementary data stored in the database file, and outputting means for outputting the supplementary data read out by the readout means.

A plurality of contents data are recorded on the recording medium reproduced by the reproducing apparatus according to the present invention. The outputting means forms the supplementary data into a list and displays the resulting list. There are provided selecting means for selectively reading out at least one of the supplementary data displayed on the outputting means. The contents data matched to the supplementary data selected are read out from the recording medium and reproduced.

A further reproducing apparatus according to the present invention comprises readout means for selectively reading out, from a recording medium having recorded thereon a contents file and a database file, the contents file having stored therein contents data and supplementary data matched to the contents data, the database file having stored therein the supplementary data matched to the contents data, the supplementary data stored in the contents file and the supplementary data stored in the database file, and outputting means for outputting the supplementary data read out by the readout means.

Other objects and advantages of the present invention will be become more apparent from the following description of preferred embodiments thereof especially when read in conjunction with the drawings.

### Brief Description of the Drawings

Fig.1 shows the configuration of plural files formed on a CD-R.
Fig.2 shows the file structure of a track index file TRINX.
Fig.3 shows an illustrative structure of a track name database file TRNDB.
Fig.4 shows the structure of a name slot.
Fig.5 shows the structure of an audio data file arranged in a directory "HIFI".
Fig.6 shows a data structure of fringe data.
Fig.7 shows the relevance among the audio data file and respective database files TRNDB, ARNDB and ALNDB.
Fig.8 is a block diagram showing a personal computer, forming a recording apparatus according to the present invention, and a personal computer as well as a CD player, forming a reproducing apparatus.
Fig.9 is a flowchart showing a reproducing routine for reproducing a CD-R using the personal computer.
Fig.10 is a flowchart showing a reproducing routine for reproducing a CD-R using a portable CD player.

### Best Mode for Carrying out the Invention

Referring to the drawings, the data recording medium, data recording method and the data reproducing apparatus according to the present invention will be explained in detail.

First, the file structure on a disc, as a recording medium, embodying the present invention, will now be explained.

The present invention is applied to a CD-R (Compact Disc-Recordable). On this CD-R are recorded music contents data. The CD-R is handled as a write-once recording medium in an unrecorded area of which digital data can be additively recorded later.

In a root directory of the CD-R, there are arranged a track index file TRINX and three database files TRNDB, ARNDB and ALNDB. In this case, the track index file TRINX is a file corresponding to the TOC (table of contents) of a customary CD. The file TRNDB is a track name database file, having a title of each track, and the file ARNDB is an artist name database file having an artist name of each track. The file ALNDB is an album name database having an album name database file having an album name of each track.

When recording contents data, that is, digital audio data, in an encrypted form, a key file is also arranged in the root directory, and the key information for decoding encrypted digital audio data is provided in this key file.

Moreover, in this CD root directory, a directory having a directory name of "HIFI" is arranged and n audio data files are arranged in this directory "HIFI". When a CD has n tracks, the file numbers and the file names of the audio data files are "00001" to "0000n". Details of these audio data files are "00001" to "0000n" will be explained subsequently. The symbol "and" is affixed for convenience for distinguishing the directory names or filenames from the reference numerals and are not included in the directory names of filenames.

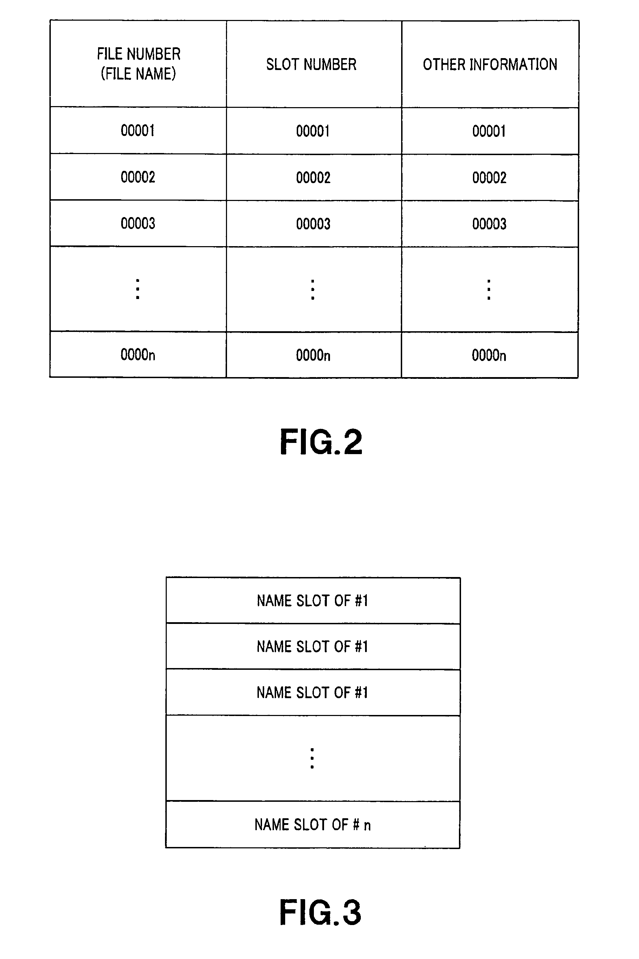

The file structure of the track index file TRINX will now be explained with reference to Fig.2.

The track index file TRINX is a file equivalent to TOC of a CD. Thus, if a CD has n tracks, the track index file TRINX has n track descriptions, each of which defines a track. The i'th track description (1≤i≤n) defines a track having the track number i.

Thus, the track description includes file numbers "00001" to "0000n" of the files where digital audio data of a relevant track have been recorded, slot numbers #1 to #n of name slots where fringe data of the track in question have been recorded, and the information pertinent to the groups into which artists' names, for example are grouped. The name slot will be explained in detail subsequently.

The structure of the name database files TRNDB, ARNDB and ALNDB will now be explained.

The track name database file TRNDB, artist name database file ARNDB and the album name database file ALNDB are all of the same structure. Consequently, the track name database file TRNDB is taken here as an example for explanation.

Fig.3 shows an example of the track name database file TRNDB. This database file TRNDB has n name slots. The name slot sequence is matched to the slot numbers #1 to #n in the track index file TRINX.

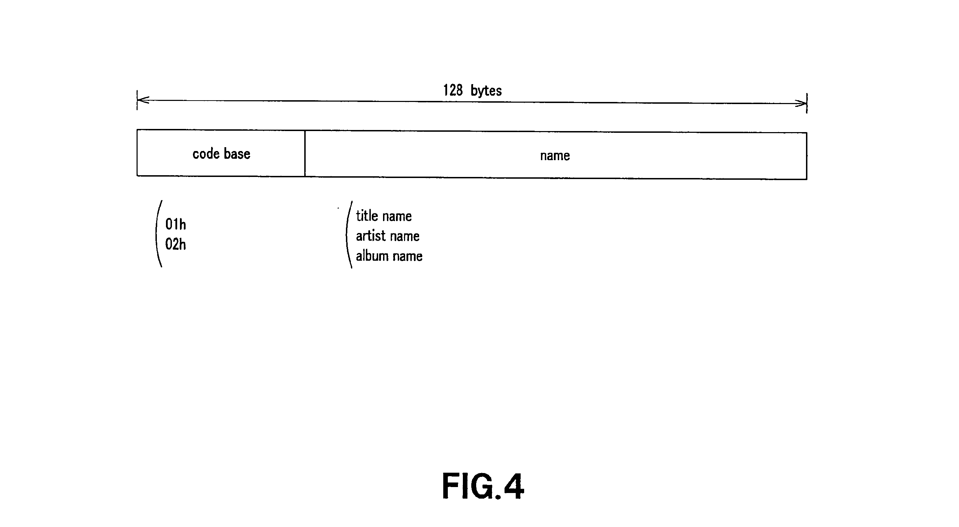

Referring to Fig.4, each name slot has a capacity of 128 bytes, and is made up by a field for the code base and a field for the names. The code base stands for the encoding system for letter strings of the name (code system or the character code). For example, if the name is stored with the ISO-8859-1 or with UTF-16, 01h or 02h is recorded, respectively. In the name field, a character string, indicating the title of the relevant track, is provided. Meanwhile, the name for the artist name database file ARNDB is the character string for the artist's name and that for the album name database file ALNDB is the character string for the album name.

The structure of the audio data file will now be explained.

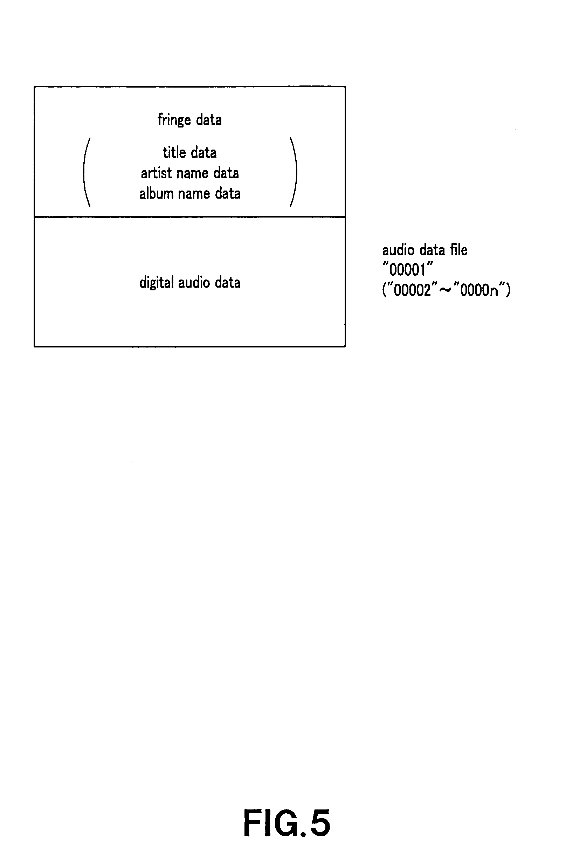

The audio data files "00001" to "0000n", arranged in the directory "HIFI", are each of a structure shown for example in Fig.5, with one audio data file being matched to one title. The filename of this audio data file is the same as the file number in the track index file TRINX.

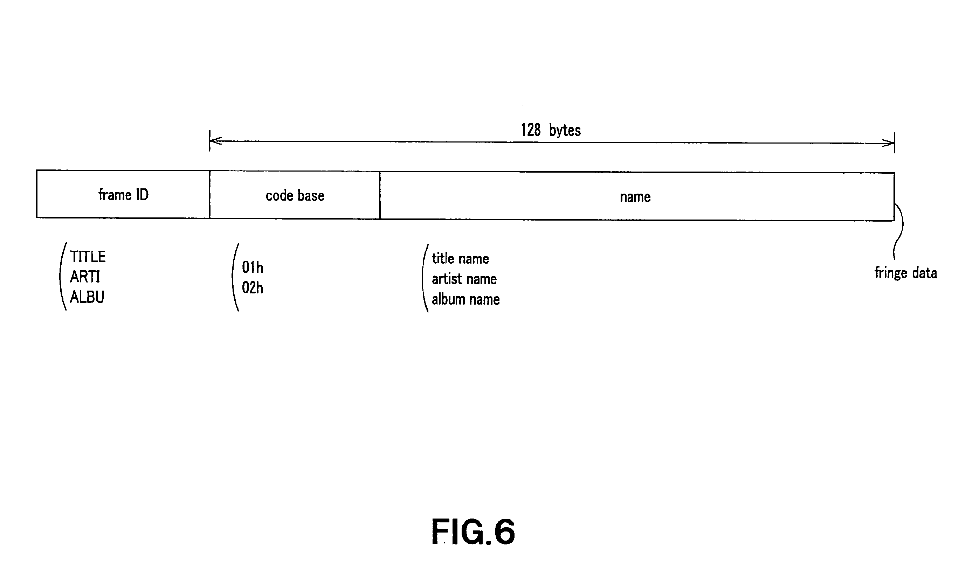

This audio data file includes three fringe data (data of the title, the artist's name and the album name) and digital audio data. In this case, the fringe data is made up by a field for the frame ID (identification or the identification information), a field for the code base and a field for the names, as shown in Fig.6. For achieving the identity with the fringe data of the name database files TRNDB, ARNDB and ALNDB, the fields for the code base and for the names are each of a 128-byte capacity. The code base and the name are of the same contents as those of the name slot shown in Fig.4. The frame ID stands for the sorts of the names, such that, if the name is the title, artist's name or the album name, the frame ID is "TITL", "ARTI" or "ALBU", respectively.

Moreover, the digital audio data is the same as that of the current CD, and is digital data obtained on A/D conversion of the original audio signals with the sampling frequency of 44.1 kHz and with the number of quantization bits equal to 16.

The configuration of the track information will now be explained.

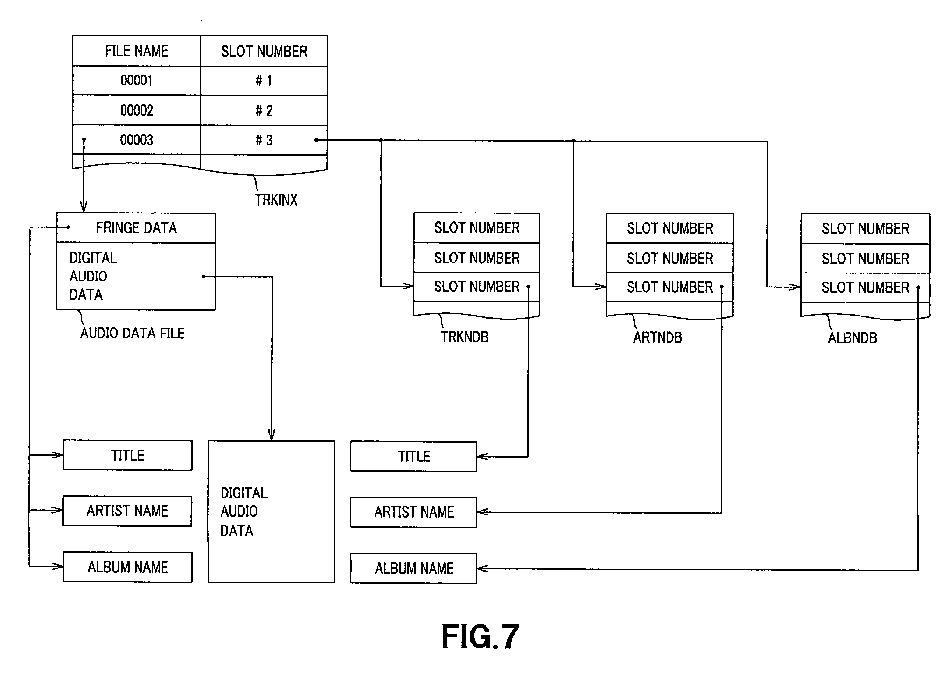

With the above-described configuration and structure of the respective files on the disc, the respective data are associated with one another as shown in Fig.7.

Consequently, the fringe data may be read by a sequence of operations for display as explained later. The musical numbers matched to the fringe information may also be reproduced.

The recording apparatus and the reproducing apparatus, used in the present invention, will now be explained.

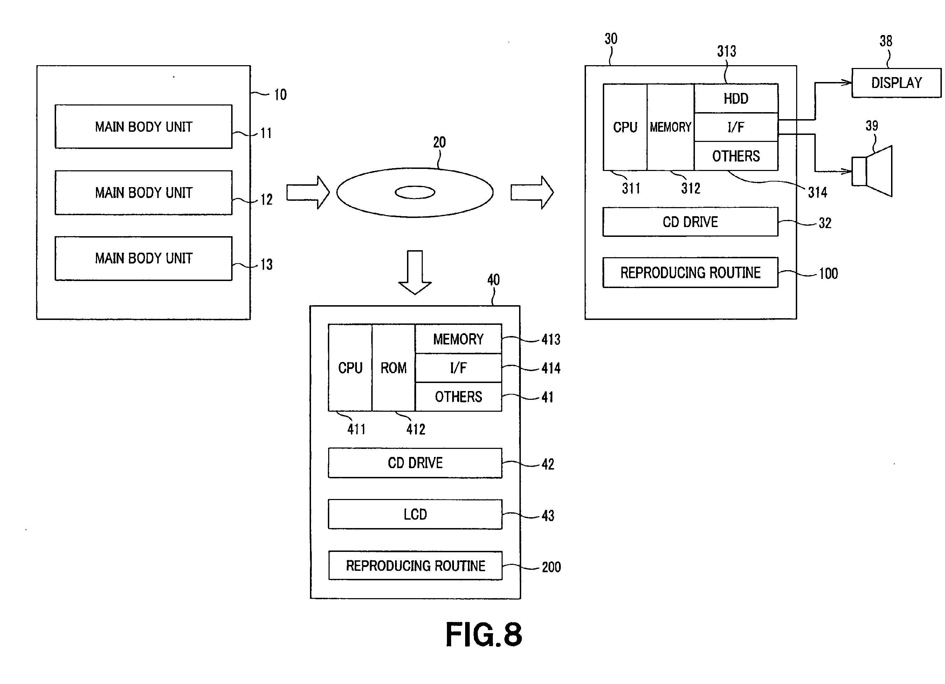

In the present invention, a personal computer 10 is used as a recording apparatus, as shown in Fig.8. A CD-R 20 is used as a recording medium, and a personal computer 30 or a portable CD player 40 is used as an apparatus for reproducing the data recorded on the CD-R 20.

The personal computer 10, forming the recording apparatus according to the present invention, includes a main body unit 11, forming the essential part of the computer. This main body unit 11 includes a CPU (central processing unit), a hard disc device, a memory, an input/output interface and a user interface.

The personal computer 10 also includes a hard disc device 12 and a CD-R drive device 13. In the hard disc device 12, digital audio data of plural music airs, permitted for copying, and fringe data thereof, are recorded and stored in a file structure of a predetermined format.

The hard disc device 12 used may be that enclosed in the main body unit 11. That is, the hard disc device 12 used may be a part of the hard disc device in which there are installed an OS (operating system) for the personal computer 10 or an application.

The music airs, stored in the hard disc device 12, are digital audio data compressed in accordance with, for example, the ATRAC3 (registered trademark) system (Adaptive Transform Acoustic Coding 3).

The CD-R drive device 13 encodes the digital data, supplied thereto, for error correction, and modulates the data for recording. The so modulated data are optically recorded on the CD-R.

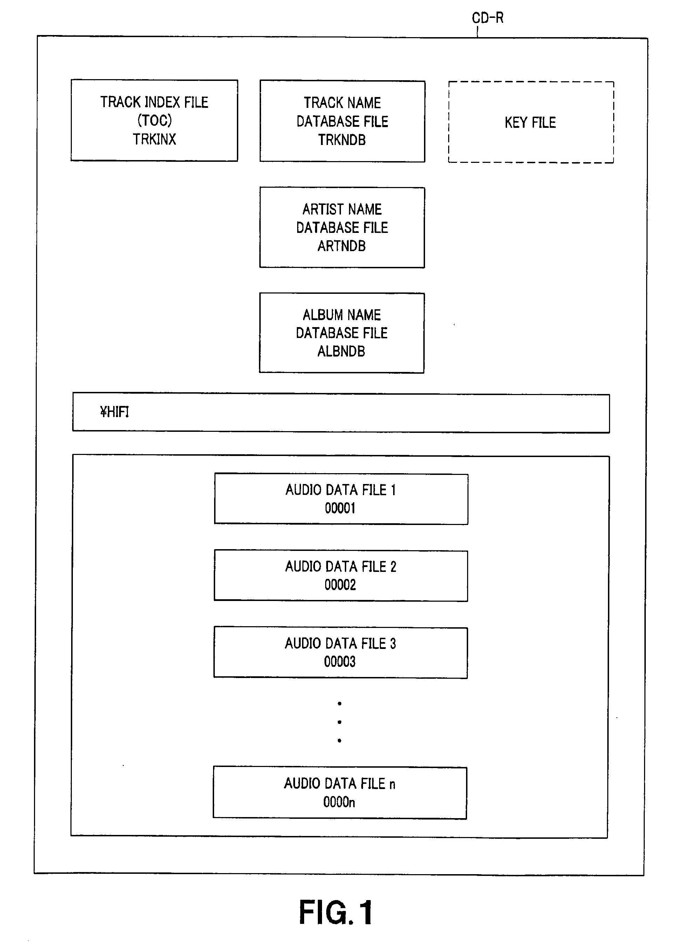

For copying the music airs, stored in the hard disc device 12, on a CD-R, audio data files and database files TRNDB, ARNDB and ALNDB, explained with reference to Figs.1 to 7, are formed for respective music airs, from the digital audio data files and the fringe data, these files being supplied to the CD-R drive device 13 and recorded on the CD-R 20 in the configuration shown in Fig.1. Moreover, in keeping with the recording, the track index file (TOC) TRKINX is formed or updated in the CD-R 20.

In this manner, the digital audio data of the music airs, stored in the hard disc device 12, are recorded on the CD-R 20 along with the fringe data. At this time, the respective data are associated with one another on the CD-R 20 as shown in Fig.7.

The operation for reproducing digital audio data and fringe data of music airs, recorded on the CD-R as described above, will now be explained.

Here, the case in which the CD-R 20 is reproduced using a reproducing apparatus having an allowance in the system memory area, such as a stationary CD player or a personal computer, will be explained.

First, the case in which the CD-R 20 is reproduced using the personal computer 30 is explained with reference to Fig.8.

Similarly to the personal computer 10 used for recording, the personal computer 30, used for reproducing the CD-R 20, includes a main body unit 31 forming the major portion of the computer. The main body unit 31 is of the structure similar to that of the personal computer 10 used for recording, described above. That is, the main body unit 31 includes a CPU (central processing unit) 311, a memory 312, a hard disc device 313 and a user interface 314. To the personal computer 30, used for reproducing the CD-R 20, are connected a display 38 and a loudspeaker 39, as shown in Fig.8.

The personal computer 30 also includes a CD drive unit 32 and a reproducing routine 100. The CD drive unit 32 optically reproduces the signals recorded on the CD or CD-R, demodulates the reproduced signals and decodes the resulting signals for error correction to output the original digital data, in a manner not shown.

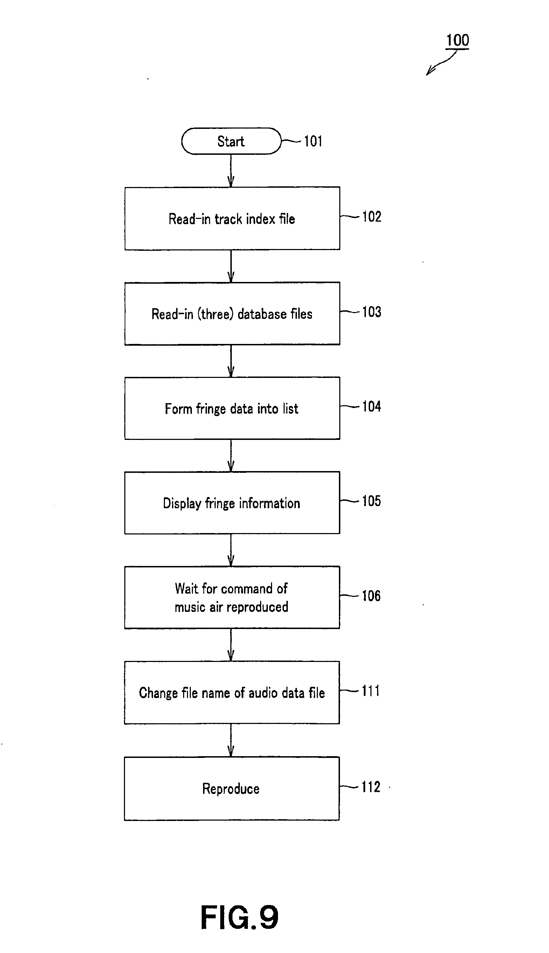

The reproducing routine will be explained in detail subsequently. The reproducing routine 100 includes contents shown for example in Fig.9. For reproducing the CD-R 20, the fringe data are read from the database files TRNDB, ARNDB and ALNDB to display the fringe information. Meanwhile, the reproducing routine 100 represents an extraction of only the part of the reproducing routine relevant to the present invention.

That is, when the representation of the CD-R 20 is commanded to the personal computer 30, the processing of the CPU 311 commands the start of the reproducing routine 100 (step 101). In the next step 102, the track index file TRINX is read from the CD-R 20 into a memory 312. In a step 103, the name database files TRNDB, ARNDB and ALNDB are read from the CD-R 20 into the memory 312.

In the next step 104, the title, artist's name and the album name are taken out from the name database files TRNDB, ALNDB and ARNDB, read in from step 103, for each slot number of the track index file TRINX read in the step 102. A list is formed with each one of the title, artist's name and the album name thus taken out as a set.

In the next step 105, the list data formed in the step 104 are supplied to a display 38 where the list is displayed. If, in this case, the display area of the display 38 is wide, plural sets of the titles, artists' names and the album names are displayed, beginning from the leading set, in the order of the track numbers. If the display area of the display 38 is narrow, the leading end set of the title, artist's name and the album name is displayed.

Then, processing transfers to a step 106 to wait for a command for a music air (track) to be reproduced. During this waiting for the command, a preset key is pressed by the user interface 314 of the main body unit 31. The demonstration on the display 38 is scrolled to display the targeted title. If reproduction is commanded for the targeted title, the slot number of the name slot which imparts the title is converted into a filename (file number) by the track index file TRINX read in the step 102. In the next step 112, out of the audio data files "00001" to "0000n" of the directory "HIFI", the audio data file of the filename of the results of conversion of the step 111 is selected and the digital audio data of the audio data file are reproduced.

In this manner, the fringe information is displayed and the music air is reproduced. In this case, that is, when there is allowance in the system memory area, the name database files TRNDB, ARNDB and ALNDB are all read-in from the CD-R 20, and the so read-in data are used to make the display. Hence, the display contents may be changed quickly, while overmuch time is not taken before reproducing the music air.

The case in which the CD-R 20 is reproduced by a reproducing apparatus with a small capacity of the system memory area, such as a portable CD player, is explained with reference to Fig.8.

The portable CD player 40, used for reproducing the CD-R 20 according to the present invention, includes a system control circuit 41, a CD drive 42 and an LCD (liquid crystal display) 43, as a display unit, as shown in Fig.8.

The system control circuit 41 is formed by a micro-computer and includes a CPU 411, a ROM (read-only memory) 412, a memory 413 and a user interface 414. The CD drive 42 optically reproduces the signals, recorded on the CD or on the CD-R, demodulates the reproduced signals and corrects the demodulated signals for errors to output original digital data, in a manner not shown. The LCD 43 forms a display unit for displaying the information by e.g. the fringe data.

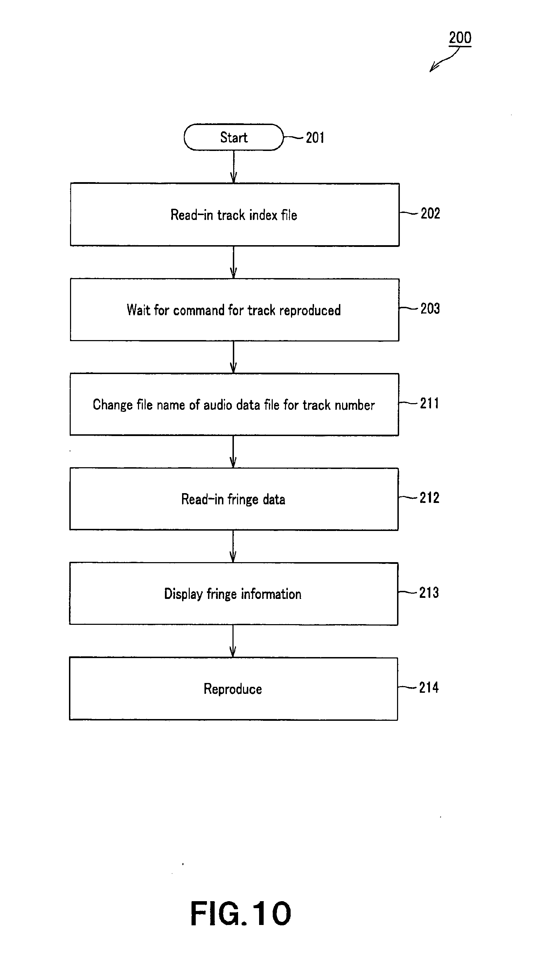

The CD player 40 also includes a reproducing routine 200 embodying the present invention. The reproducing routine 200 will be explained in detail subsequently. The reproducing routine 200 has contents shown for example in Fig.10. For reproducing the CD-R 20, the fringe data of the audio data file are read from track to track to display the fringe information. Meanwhile, the reproducing routine 200 represents an extraction of only the part of the reproducing routine relevant to the present invention. The reproducing routine 200 is provided in, for example, the ROM 412, and is run by the CPU 411 when reproducing the CD-R 20.

That is, when a command for the CD player 40 to reproduce the CD-R 20 is issued, the processing in the CPU 411 commands the start of the reproducing routine 200 (step 201). In the next step 202, the track index file TRINX is read from the CD-R 20 into the memory 413 to wait in a step 203 for the track number of the music air to be reproduced.

When the track number of the target music air is entered, processing transfers to a step 211. In this step 211, the track number entered is converted into a filename (file number) by the track index file TRINX read-in in the step 202.

In the next step 212, the audio data file of the filename as the result of the conversion in the step 211, out of the audio data files "00001" to "0000n" of the directory "HIFI" of the CD-R 20, is selected, and fringe data are read from this audio data file into the memory 413. By this fringe data, the fringe information is displayed on the LCD 43.

In the next step 213, digital audio data are read out from the audio data file of the filename, as the result of the conversion in the step 211, out of the audio data files "00001" to "0000n" of the directory "HIFI", for reproduction.

In this manner, the fringe information is displayed, and the music air is reproduced. Since the fringe information is displayed in this case as the audio data file is read-in each time a track is specified, the fringe information may be displayed even if the capacity of the system memory 413 is small. Additionally, since the audio data file, having the fringe data as one with the digital audio data, is used at this time, no overmuch time is taken since the display of the fringe information until reproduction of the music air.

According to the present invention, the database file of the fringe data is provided in distinction from the file of the digital audio file, the database file of the fringe data may be read at the outset in the case of a reproducing apparatus having a sufficient allowance of the system memory, such as a deck type CD player or a personal computer, such that it is possible to make an overview display of the fringe information or to make a quick scroll display.

Moreover, since the fringe data are included in the audio data file having digital audio data, the fringe information may be displayed even if the system memory capacity is small, such that no overmuch time is taken since the fringe information is displayed until the music air is reproduced.

It is noted that, if there is allowance in the database files TRNDB, ARNDB and ALNDB, thumbnails or icon picture data, relevant to the contents, may be included to display the thumbnails and icons. That is, only the necessary minimum amount of fringe data may be stored in the audio data file, whilst fringe data other than the fringe data stored in the audio data file may be stored in the database files.

On the other hand, it is possible to store fringe data with a one-byte based character code, such as ISO-8859-1 character code, and to select the fringe data by a multi-byte-based character code, such as the UTF-16 character code, for the database file, to display the necessary information. In a personal computer having a large display surface, the necessary information may be displayed in Japanese, by selecting the fringe data stored in the database file.

Although the case of employing the CD-R as a recording medium has been explained in the foregoing, any of recordable mediums, such as a write-once recording medium, e.g. a DVD-R (DVD Recordable), rewritable recording mediums, on which data may be repeatedly rewritten, e.g. a CD-RW (Compact Disc Rewritable) or DVD-RW (DVD Rewritable), or recordable mediums, such as magnetic disc, magneto-optical discs or semiconductor memories, may be used.

The contents data are not limited to music and may also be pictures, such as still or moving pictures, or texts, such as sentences. For example, if the contents are photographic picture data, the date/time of photographing, site of photographing, name off a photographer or his/her comments may be included as fringe data. In addition, the thumbnail pictures or icon pictures for classification may also be stored, as described above.

The present invention is not limited to the above embodiments, explained with reference to the drawings, such that various changes, substitutions or equivalents may be envisaged without departing from the claims and the purport of the invention.

### Industrial Applicability

According to the present invention, the fringe data are provided in the contents file and in the database file. Thus, in reproducing the information by the fringe data, a reproducing apparatus is able to select the source from which to read the fringe data, depending on the size of the memory capacity or the object of use of the fringe data. Hence, it becomes possible to relieve the load when the reproducing apparatus reads in the fringe data, and to shorten the time until the fringe data are reproduced.

## Claims

1. A recording medium having recorded thereon a contents file and a database file, along with contents data, said contents file having stored therein contents data and supplementary data matched to said contents data, said database file having stored therein supplementary data matched to said contents data.

2. The recording medium according to claim 1 wherein the data size of said supplementary data stored in said contents file and the data size of the supplementary data stored in said database file are prescribed to maintain the identity of said data stored in said contents file and the supplementary data stores in said database file.

3. The recording medium according to claim 1 wherein said contents data are digital audio data, said supplementary data is data of the title, artist's name and the album name, and wherein the data of said title, said data of the artist's name and said data of the album name are held in respective different database files.

4. The recording medium according to claim 1 wherein said recording medium is a disc-shaped recording medium on which recording is made by a recording head.

5. A recording method comprising
recording, on a predetermined recording medium, a contents file having stored therein supplementary data for contents data, along with said contents data; and
recording, on said predetermined recording medium, a database file having stored therein supplementary data matched to said contents data.

6. A recording apparatus for recording, on a predetermined recording medium, a contents file and a database file, said contents file having stored therein contents data and supplementary data matched to said contents data, said database file having stored therein supplementary data matched to said contents data.

7. A reproducing apparatus comprising
readout means for reading out, from a recording medium having recorded thereon a contents file and a database file, said contents file having stored therein supplementary data matched to contents data, along with said contents data, said database file having stored therein supplementary data matched to said contents data, said supplementary data stored in said contents file; and
outputting means for outputting the supplementary data read out by said readout means.

8. The reproducing apparatus according to claim 7 further comprising
reproducing means for said contents data;
said readout means also reading out the contents data stored in said contents file; said reproducing means reproducing the contents data read out from said readout means.

9. A reproducing apparatus comprising
readout means for reading out, from a recording medium having recorded thereon a contents file and a database file, said contents file having stored therein contents data and supplementary data matched to said contents data, said database file having stored therein said supplementary data matched to said contents data, said supplementary data stored in said database file; and
outputting means for outputting the supplementary data read out by said readout means.

10. The reproducing apparatus according to claim 9 further comprising
reproducing means for said contents data;
said readout means also reading out the contents data stored in said contents file; said reproducing means reproducing the contents data read out from said readout means.

11. The reproducing apparatus according to claim 9 wherein a plurality of contents data are recorded on said recording medium;
said outputting means forming said supplementary data into a list and displaying the resulting list;
there being provided selecting means for selectively reading out at least one of said supplementary data displayed on said outputting means;
the contents data matched to the supplementary data selected being read out from said recording medium and reproduced.

12. A reproducing apparatus comprising
readout means for selectively reading out, from a recording medium having recorded thereon a contents file and a database file, said contents file having stored therein contents data and supplementary data matched to said contents data, said database file having stored therein said supplementary data matched to said contents data, said supplementary data stored in said contents file or said supplementary data stored in said database file; and
outputting means for outputting the supplementary data read out by said readout means.

13. The reproducing apparatus according to claim 12 further comprising
reproducing means for said contents data;
said readout means also reading out contents data stored in said contents file; said reproducing means reproducing the contents data read out from said readout means.

14. The reproducing apparatus according to claim 12 wherein a plurality of contents data are recorded on said recording medium;
said outputting means forming said supplementary data into a list and displaying the resulting list;
there being provided selecting means for selectively reading out at least one of said supplementary data displayed on said outputting means;
the contents data matched to the supplementary data selected being read out from said recording medium and reproduced.
